# EUROPEAN PATENT APPLICATION

(11) **EP 2 753 020 A1**
(43) Date of publication of application: **09.07.2014**
(21) Application number: 13197793.6
(22) Date of filing: 17.12.2013
(51) Int. Cl.: H04L 12/28, H04L 12/26

(54) **Smart apparatus and home network system using the same**

(30) Priority: 04.01.2013 KR 20130001348
(71) Applicant: Samsung Electronics Co., Ltd, Gyeonggi-do 443-742 (KR)
(72) Inventor: Lim, Jae Min, Gyeonggi-do (KR)
(74) Representative: Taor, Simon Edward William

(57) **Abstract**

A smart apparatus including: a storage unit that stores a current profile supplied to a home appliance according to an operation of the home appliance; a current detector that detects a current value supplied to the home appliance; and a controller that generates operating information of the home appliance based on the current value detected by the current detector and the current profile stored in the storage unit, wherein the smart apparatus determines an operation and an operation time of the home appliance based on current or power supplied to the home appliance without adding a new configuration to an existing home appliance.

## Description

Embodiments of the present disclosure relate to a smart apparatus and a home network system using the same, and more particularly, to a smart apparatus that determines an operation of a home appliance based on current or power supplied to the home appliance, and a home network system using the same.

With the rise of the digital era, home appliances, such as, washing machines, refrigerators, air conditioners, and the like, in homes or buildings have been converted into digital home appliances that exchange data with each other. As a result, a system that establishes a network between the home appliances and integrally manages the network has been developed.

In a network system that has been recently developed, a plurality of home appliances and a server device that integrally manages the plurality of home appliances are connected to each other via a network established in a building so as to transmit and receive data between the home appliances.

Such a network system includes a wireless connection device in which a wireless fidelity (WiFi) module is mounted on a home appliance and the home appliance connected to the WiFi module is connected to an external Internet network.

Home appliances each including such a wireless connection device have been recently released, however, existing home appliances have no wireless connection device, and thus, cannot be included in a network system.

Therefore, it is an aspect of the present disclosure to provide a smart apparatus that determines an operation of a home appliance based on current or power supplied to the home appliance without adding a new configuration to an existing home appliance, and a home network system using the smart apparatus.

Additional aspects of the disclosure will be set forth in part in the description which follows and, in part, will be obvious from the description, or may be learned by practice of the disclosure.

In accordance with an aspect of the present disclosure, a smart apparatus includes: a storage unit that stores a current profile supplied to a home appliance according to an operation of the home appliance; a current detector that detects a current value supplied to the home appliance; and a controller that generates operating information of the home appliance based on the current value detected by the current detector and the current profile stored in the storage unit.

The controller may compare the current value with the current profile to determine an operation that is being currently performed by the home appliance and may calculate an operation time at which the operation has been performed by the home appliance to generate the operating information.

The smart apparatus may further include a communication unit that transmits the operating information of the home appliance to a home server apparatus.

The smart apparatus may further include a socket outlet that supplies power to the home appliance.

The smart apparatus may further include an input unit that receives a control instruction from a user.

The smart apparatus may further include a power controller that cuts off power supplied to the home appliance.

If a user's power cutoff instruction is input via the input unit or the communication unit, the controller may control the power controller to cut off power supplied to the home appliance.

If the home appliance is connected to the smart apparatus via the socket outlet, the controller may recognize a type and a model of the home appliance.

The controller may receive the type and the model of the home appliance from the user via the input unit and may recognize the type and the model of the home appliance. The controller may compare the current value with the current profile to recognize the type and the model of the home appliance.

The smart apparatus may include a plurality of socket outlets that supply power to a plurality of home appliances, and the smart apparatus may have a shape of a long bar in which the plurality of socket outlets is disposed.

In accordance with another aspect of the present disclosure, a smart apparatus includes: a storage unit that stores a power profile consumed by a home appliance according to an operation of the home appliance; a current detector that detects a current value supplied to the home appliance; a voltage detector that detects a voltage value applied to the home appliance; and a controller that calculates power supplied to the home appliance based on the current value detected by the current detector and the voltage value detected by the voltage detector and generates operating information of the home appliance based on the calculated power and the power profile stored in the storage unit.

The controller may compare the power with the power profile to determine an operation that is being currently performed by the home appliance and may calculate an operation time at which the operation has been performed by the home appliance to generate the operating information.

In accordance with still another aspect of the present disclosure, a home network system includes: a smart apparatus that determines an operation that is being currently performed by a home appliance and calculates an operation time at which the operation has been performed by the home appliance; a home server apparatus that receives the operation that is being currently performed by the home appliance and the operation time from the smart apparatus; and a terminal that receives the operation that is being currently performed by the home appliance and the operation time from the home server apparatus and displays the operation and the operation time on a display screen of the terminal held by a user.

The smart apparatus may include a storage unit that stores a current profile supplied to a home appliance according to an operation of the home appliance, a current detector that detects a current value supplied to the home appliance, and a controller that compares the current value detected by the current detector with the current profile stored in the storage unit to determine an operation that is being currently performed by the home appliance and calculates an operation time at which the operation has been performed by the home appliance.

The smart apparatus may include a storage unit that stores a power profile consumed by a home appliance according to an operation of the home appliance, a current detector that detects a current value supplied to the home appliance, a voltage detector that detects a voltage value applied to the home appliance, and a controller that calculates power supplied to the home appliance based on the current value detected by the current detector and the voltage value detected by the voltage detector, compares the calculated power with the power profile stored in the storage unit to determine an operation that is being currently performed by the home appliance, and calculates an operation time at which the operation has been performed by the home appliance.

In accordance with yet still another aspect of the present disclosure, a method of controlling a smart apparatus that generates operating information of a home appliance, includes: detecting a current value supplied to the home appliance; comparing the current value with a current profile that has been stored in advance and is supplied to the home appliance; determining an operation that is being currently performed by the home appliance based on a comparison result of the current value and the current profile; and calculating an operation time of the home appliance based on a period of time at which the operation has been performed by the home appliance. The method may further include, if the home appliance is connected to the smart apparatus, recognizing a type and a model of the home appliance.

The recognizing of the type and the model of the home appliance may include receiving the type and the model of the home appliance from a user.

The recognizing of the type and the model of the home appliance may include comparing the current value with the current profile and recognizing the type and the model of the home appliance based on a comparison result of the current value and the current profile.

In accordance with yet still another aspect of the present disclosure, a method of controlling a home network system, includes: detecting a current value supplied to a home appliance; comparing the current value with a current profile that has been stored in advance and is supplied to the home appliance; determining an operation that is being currently performed by the home appliance based on a comparison result of the current value and the current profile; calculating an operation time of the home appliance based on a period of time at which the operation has been performed by the home appliance; and displaying the operation that is being currently performed by the home appliance and the operation time on a display screen of a terminal held by a user.

These and/or other aspects of the disclosure will become apparent and more readily appreciated from the following description of the embodiments, taken in conjunction with the accompanying drawings of which:
FIG. 1 is a view illustrating a home network system using a smart apparatus, according to an example embodiment of the present disclosure;
FIG. 2 is a block diagram illustrating a signal flow of the home network system using the smart apparatus illustrated in FIG. 1;
FIG. 3 is a view illustrating the exterior of a smart apparatus, according to an example embodiment of the present disclosure;
FIG. 4 is a block diagram illustrating a control flow of the smart apparatus illustrated in
FIG. 3;

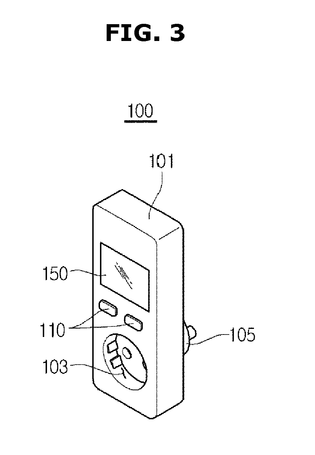

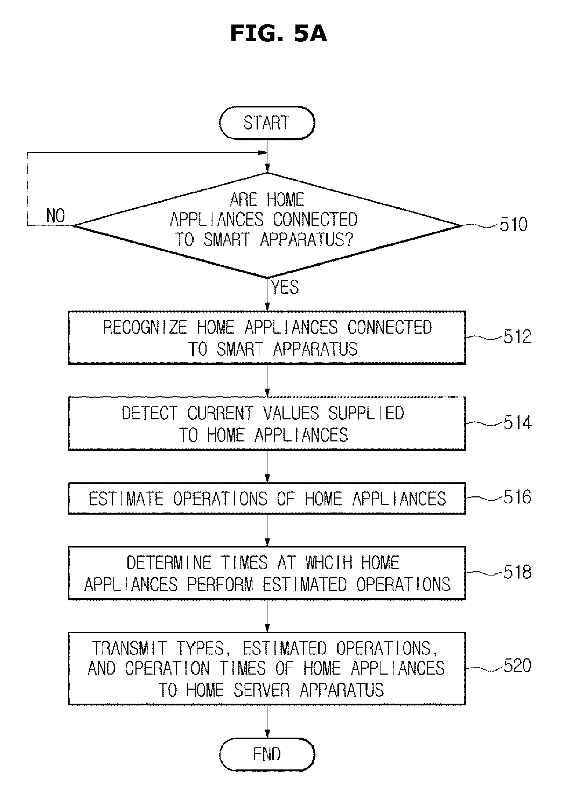

FIG. 5A is a flowchart illustrating a control sequence of the smart apparatus of FIG. 3;

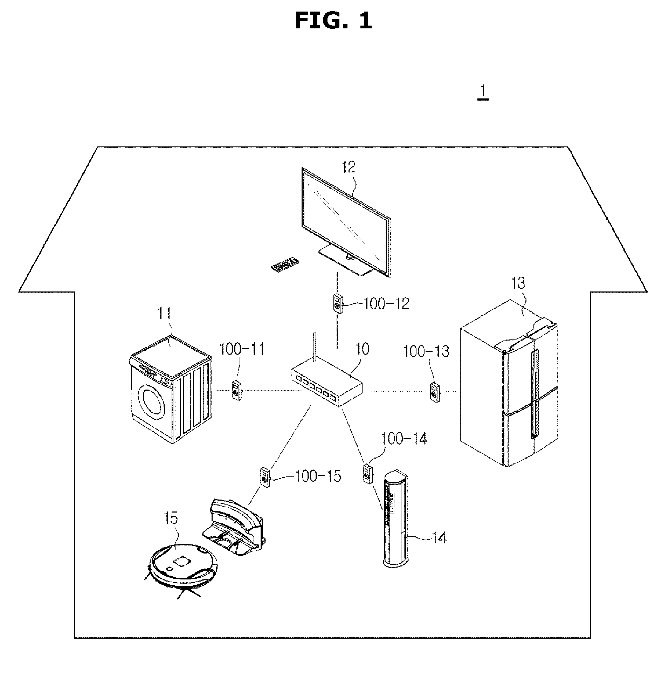

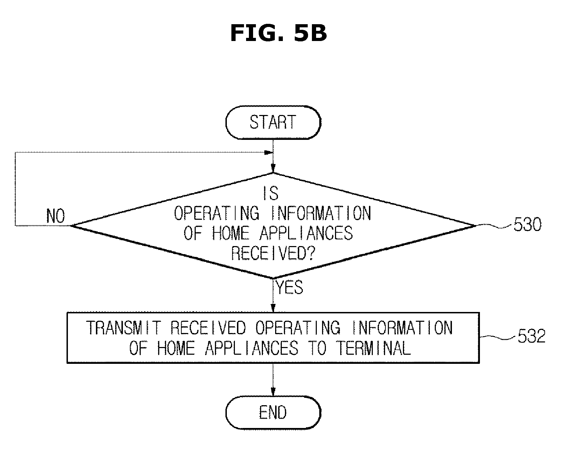

FIG. 5B is a flowchart illustrating a control sequence of a home server apparatus of the home network system illustrated in FIG. 1;

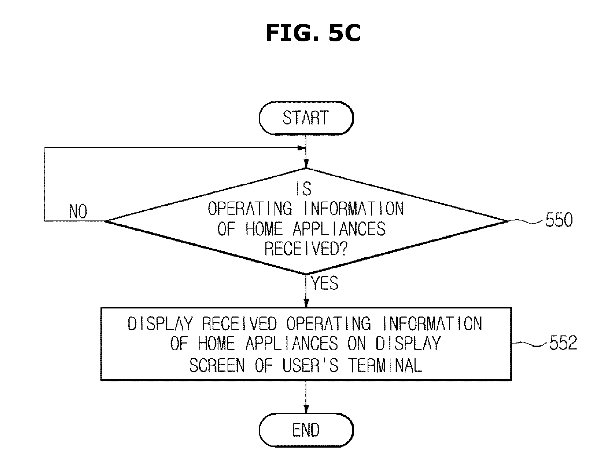

FIG. 5C is a flowchart illustrating a control sequence of a terminal of the home network system of FIG. 1;

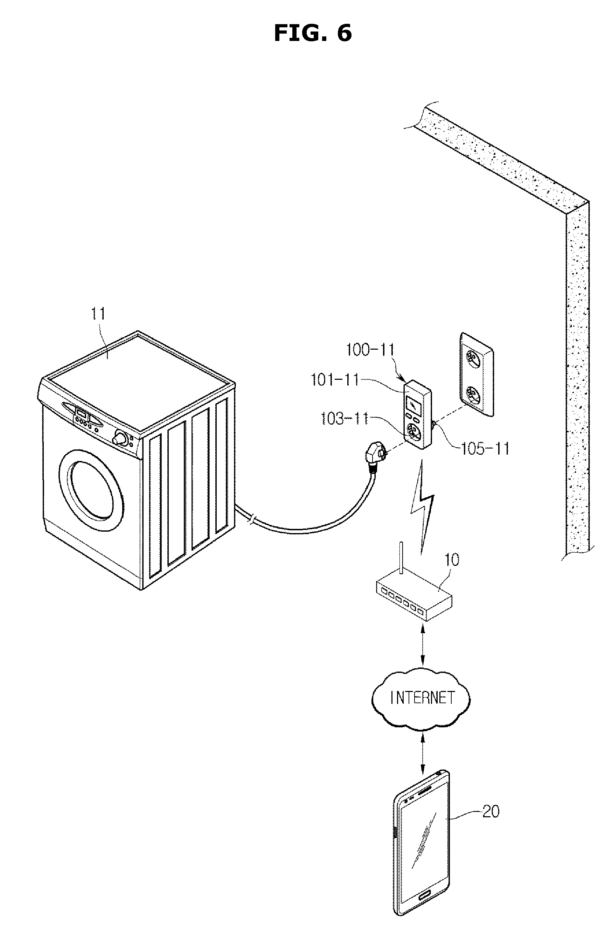

FIG. 6 is a view illustrating a washing machine and the smart apparatus of the home network system of FIG. 1;

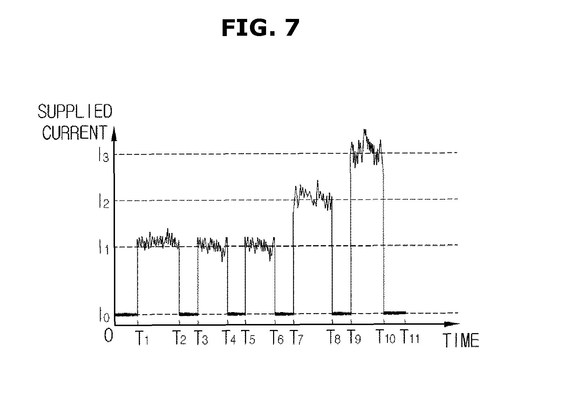

FIG. 7 is a graph illustrating current supplied over time to the washing machine;

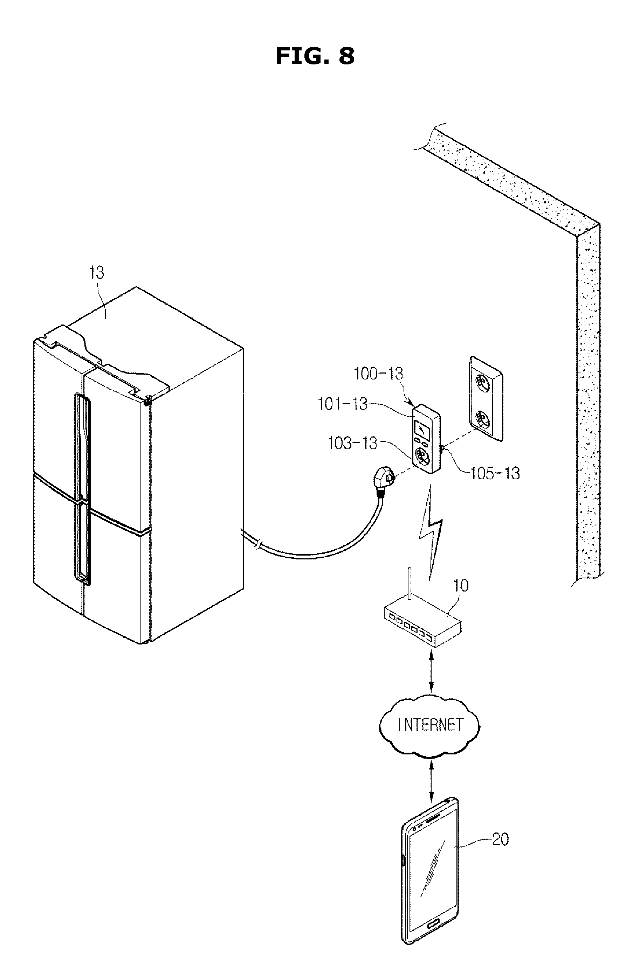

FIG. 8 is a view illustrating a refrigerator and the smart apparatus of the home network system of FIG. 1;

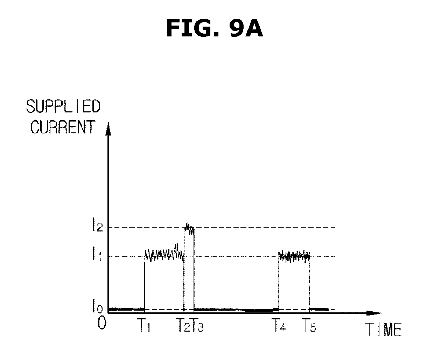

FIG. 9A is a graph illustrating current supplied when a refrigerator operates normally;

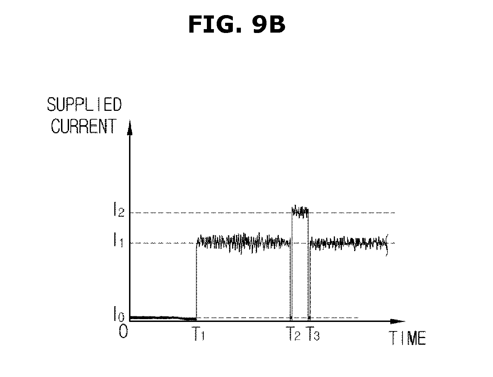

FIG. 9B is a graph illustrating current supplied when the refrigerator operates abnormally;

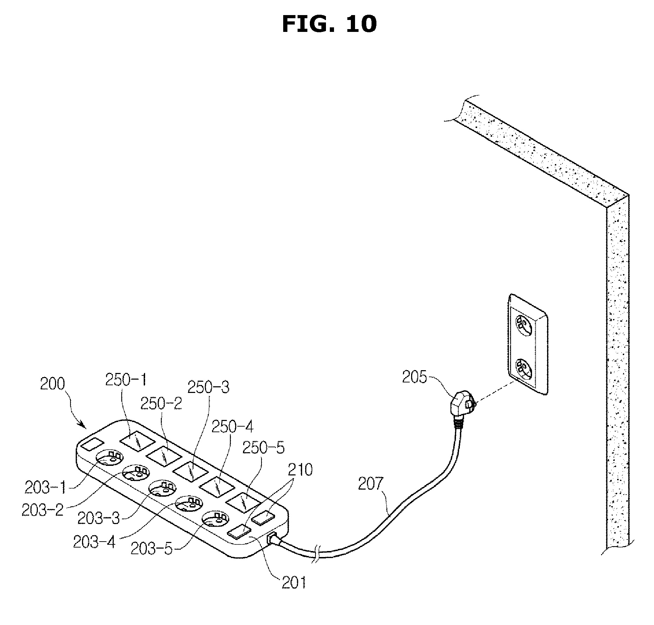

FIG. 10 is a view illustrating the exterior of a smart apparatus, according to another example embodiment of the present disclosure;

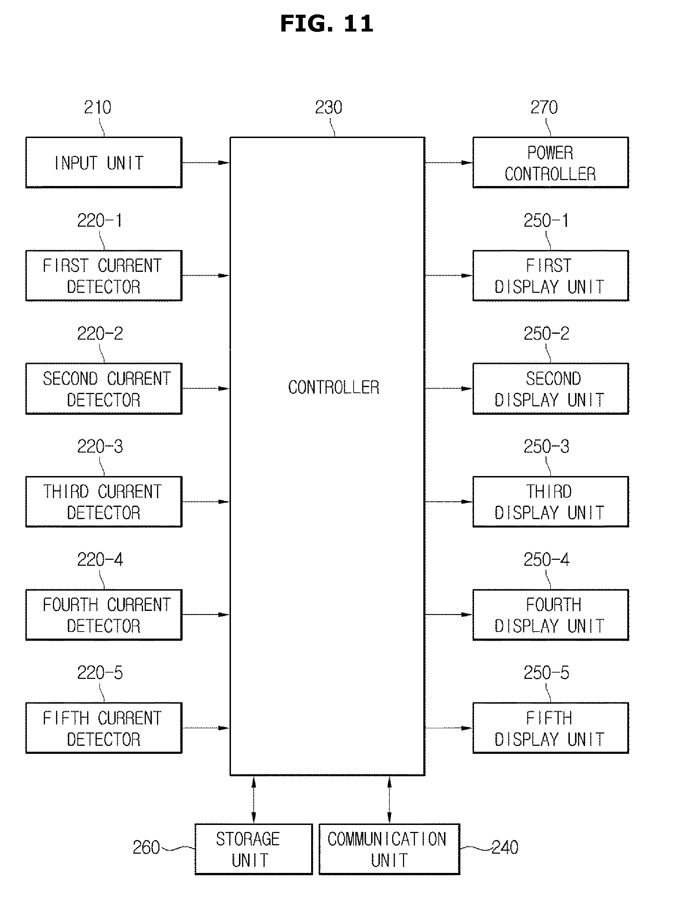

FIG. 11 is a block diagram illustrating a control flow of the smart apparatus illustrated in FIG. 10; and

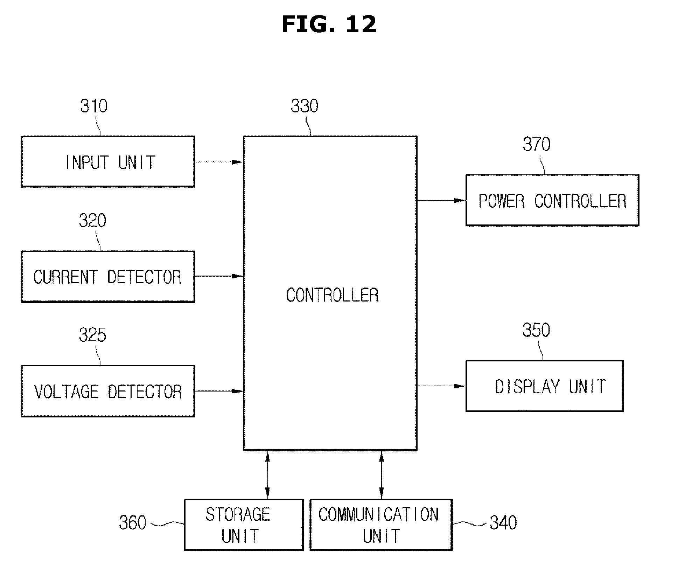

FIG. 12 is a block diagram illustrating a control flow of a smart apparatus, according to another example embodiment of the present disclosure.

Configurations shown in embodiments enumerated in the present specification and the drawings are just exemplary embodiments of the present disclosure, and it should be understood that there are various modified examples capable of replacing the embodiments of the present specification and the drawings at the time of filling the present application.

Reference will now be made in detail to the embodiments of the present disclosure, examples of which are illustrated in the accompanying drawings, wherein like reference numerals refer to like elements throughout.

First, referring to FIG. 1, a home network system 1 using a smart apparatus 100, according to an example embodiment of the present disclosure will be described.

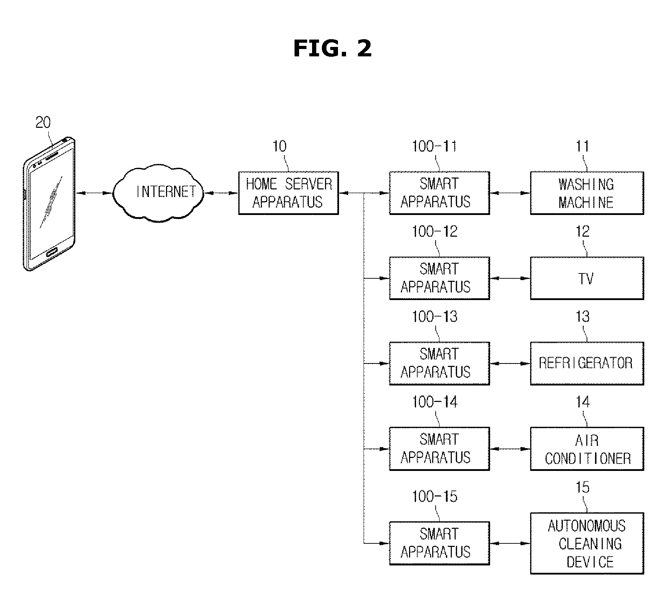

FIG. 1 is a view illustrating the home network system 1 using the smart apparatus 100, according to an example embodiment of the present disclosure. Further, FIG. 2 is a block diagram illustrating a signal flow of the home network system 1 using the smart apparatus 100 illustrated in FIG. 1.

Referring to FIGS. 1 and 2, the home network system 1 includes home appliances 11 to 15 including a washing machine 11, a television (TV) 12, a refrigerator 13, an air conditioner 14, and an autonomous cleaning device 15. Further, the home network system 1 includes smart apparatuses 100-11 to 15 that detect operating information regarding operations performed by the home appliances 11 to 15, a home server apparatus 10 that receives the operating information of the home appliances 11 to 15 from the smart apparatuses 100-11 to 15 and transmits the operating information of the home appliances 11 to 15 to a terminal 20, and the terminal 20 for displaying the operating information of the home appliances 11 to 15 on a display screen of the terminal 20 held by the user.

The home appliances 11 to 15 include all of electronic devices used in a home, such as the washing machine 11, the TV 12, the refrigerator 13, the air conditioner 14, and the autonomous cleaning device 15. No additional communication device for the home network system 1 is required. However, home appliances 11 to 15 are examples, and thus, the present disclosure is not limited thereto.

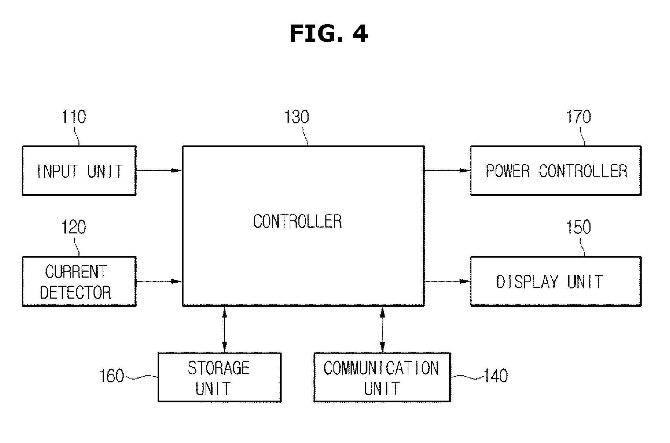

The smart apparatuses 100-11 to 15 detect information regarding operations of the home appliances 11 to 15 based on current values supplied to the home appliances 11 to 15 or power consumed by the home appliances 11 to 15 and provide the operating information of the home appliances 11 to 15 to the home server apparatus 10. The operating information of the home appliances 11 to 15 that are detected by the smart apparatuses 100-11 to 15 include operations performed by the home appliances 11 to 15, times at which the operations of the home appliances 11 to 15 are performed, and possibilities of abnormal operations of the home appliances 11 to 15 in addition to current supply amounts of the home appliances 11 to 15. Configurations and functions of the smart apparatuses 100-11 to 15 will be described with reference to FIGS. 3 and 4 below. The above-described types of operating information are examples, and thus, the present disclosure is not limited thereto.

The home server apparatus 10 receives the operating information of the home appliances 11 to 15 from the smart apparatuses 100-11 to 15 through near field communication (NFC), such as wireless fidelity (WiFi), Bluetooth, or Zigbee, and the like, and transmits the operating information of the home appliances 11 to 15 directly to the terminal 20 that will be described later through wireless communication, such as WiFi, Bluetooth, or Zigbee, and the like, or to the terminal 20 through a local area network (LAN) such as Ethernet or a wide area network (WAN) such as the Internet, and the like.

A modem that enables wireless communication, an Internet sharer, a hub device, a switch device, a bridge device, a router device, or a gateway device may be used in the home server apparatus 10.

The terminal 20 communicates directly with the home server apparatus 10 through wireless communication such as WiFi, Bluetooth, or Zigbee, and the like, or communicates with the home server apparatus 10 through a LAN such as Ethernet or a WAN such as the Internet, and the like, receives the operating information of the home appliances 11 to 15 from the home server apparatus 10, and displays the operating information of the home appliances 11 to 15 on the display screen of the terminal 20 held by the user.

Alternatively, the terminal 20 may be a dedicated device for performing a function of the terminal 20 for displaying the operating information of the home appliances 11 to 15 received from the home server apparatus 10 on the display screen of the terminal 20 held by the user, or may install a program for performing the above-described function in a commonly-used portable device and may execute the program. Examples of commonly-used portable devices include smartphones, personal digital assistants (PDAs), portable multimedia players (PMPs), laptop computers, and desktop computers. In addition, the terminal 20 includes all of devices that are capable of performing various functions using an application program, such as digital cameras each having a wired/wireless communication function, camcorders, and the like.

Hereinafter, the smart apparatus 100, according to an example embodiment of the present disclosure will be described.

FIG. 3 is a view illustrating the exterior of the smart apparatus 100, according to an example embodiment of the present disclosure. Further, FIG. 4 is a block diagram illustrating a control flow of the smart apparatus 100 illustrated in FIG. 3.

Referring to FIG. 3, the smart apparatus 100 may include a body 101 that constitutes the exterior of the smart apparatus 100, a plug 105 to which power is supplied from a commonly-used power supply, a socket outlet 103 that provides power to the home appliances 11 to 15, a display unit 150 that displays information of the home appliances 11 to 15, and an input unit 110 that receives a control instruction from the user.

The body 101 may have a box-shaped rectangular parallelepiped. However, aspects of the present disclosure are not limited thereto, and the body 101 may have various shapes, such as an oval pillar shape, a cylindrical shape, and the like.

The plug 105 may be disposed at a rear side of the body 101 and may receive power of 110 V or 220 V from the commonly-used power supply. As illustrated in FIG. 3, the plug 105 of the smart apparatus 100 includes two cylinders that contact the commonly-used power supply. However, aspects of the present disclosure are not limited thereto, and the plug 105 of the smart apparatus 100 may have a shape suitable for a standard of each country. For example, the plug 105 may include two bars according to the U.S. standard, two bars and one cylinder according to the Japanese standard, three cylinders according to the Italian standard, or three bars according to the British standard.

The socket outlet 103 may be disposed at a front side of the body 101 and may provide the power of 110 V or 220 V received from the commonly-used power supply to the home appliances 11 to 15. As illustrated in FIG. 3, the socket outlet 103 of the smart apparatus 100 illustrated in FIG. 3 includes two circular holes. However, aspects of the present disclosure are not limited thereto, and the socket outlet 103 of the smart apparatus 100 may have a shape suitable for the standard of each country. For example, the socket outlet 103 may include two rectangular holes according to the U.S. standard, two rectangular holes and one circular hole according to the Japanese standard, three circular holes according to the Italian standard, or three rectangular holes according to the British standard.

The display unit 150 may be disposed at the front of the body 101 and may display information of the home appliances 11 to 15 to which power is supplied through the smart apparatus 100, or operations that are being currently performed by the home appliances 11 to 15. The display unit 150 may be a liquid crystal display (LCD), a light-emitting diode (LED), and the like.

The input unit 110 may be disposed at the front of the body 101 and may receive a control instruction to turn on/off the smart apparatus 100, to cut off the power supplied to the home appliances 11 to 15, or to change the content of information displayed on the display unit 150 from the user. The input unit 110 may be a button type switch, a membrane switch, a touch panel, and the like.

The smart apparatus 100 may include additional elements, such as the display unit 150 and the input unit 110. However, aspects of the present disclosure are not limited thereto, and the smart apparatus 100 may be a touch screen panel (TSP) in which a display device and an input device are integrally configured. That is, the smart apparatus 100 may include other elements or may selectively include the above-described elements.

Referring to FIG. 4, the smart apparatus 100 includes the input unit 110 that receives the control instruction from the user so as to perform a function of the smart apparatus 100, a current detector 120 that detects current values supplied to the home appliances 11 to 15, a storage unit 160 that stores current profiles supplied to the home appliances 11 to 15, a controller 130 that generates operating information of the home appliances 11 to 15 based on the detection result of the current detector 120 and the current profiles stored in the storage unit 160, a communication unit 140 that communicates with the home server apparatus 10, the display unit 150 that displays information or operating information of the home appliances 11 to 15, and a power controller 170 that controls power supplied to the home appliances 11 to 15.

Descriptions of the input unit 110 and the display unit 150 that have been already described with reference to FIG. 3 will be omitted.

The current detector 120 detects the current values supplied to the home appliances 11 to 15 through the socket outlet 103 and provides the detected current values to the controller 130.

The current detector 120 may adopt a non-insulation type current detection method, whereby a shunt resistor is disposed and the magnitude of a current is detected using a potential difference between both ends of the shunt resistor, or an insulation type current detection method using current transform, whereby a current is transformed by winding primary coils and secondary coils around both ends of a ring-shaped iron core.

The storage unit 160 stores the current profiles supplied to the home appliances 11 to 15 depending on types, models, and operations of the home appliances 11 to 15. For example, in case of a washing machine, the storage unit 160 may store a current profile supplied to a washing machine of model A1 manufactured by a manufacturer A when a washing operation is performed, a current profile supplied to the washing machine of model A1 manufactured by the manufacturer A when a rinsing operation is performed, a current profile supplied to the washing machine of model A1 manufactured by the manufacturer A when a dehydration operation is performed, and a current profile supplied to the washing machine of model A1 manufactured by the manufacturer A when a drying operation is performed.

Alternatively, the storage unit 160 may separately store current profiles supplied to a washing machine of model B1 manufactured by a manufacturer B according to operations of the washing machine of model B1 manufactured by the manufacturer B. In case of a refrigerator, the storage unit 160 may store a current profile supplied to a refrigerator of model A2 manufactured by the manufacturer A when the refrigerator of model A2 manufactured by the manufacturer A is in a standby state, a current profile supplied to the refrigerator of model A2 manufactured by the manufacturer A when a compressor is driven, and a current profile supplied to the refrigerator of model A2 manufactured by the manufacturer A when a defrost heater is driven.

The current profiles to be supplied depending on types and operations of the home appliances 11 to 15 may be stored in the storage unit 160 when the smart apparatus 100 is manufactured, and when a new home appliance is released after the smart apparatus 100 has been manufactured, current profiles to be supplied depending on operations of the new home appliance may be updated.

The storage unit 160 may be volatile memory, such as dynamic random-access memory (DRAM) or static random-access memory (SRAM), in which stored contents are extinct if the supply of power is stopped. However, even if the supply of power is stopped, the storage unit 160 may be nonvolatile memory, such as flash memory or a solid state disk (SSD), in which stored contents are retained.

The controller 130 compares the detection result of the current detector 120 and the current profiles stored in the storage unit 160 with each other, determines operations of the home appliances 11 to 15, and generates operating information of the home appliances 11 to 15.

In detail, the controller 130 compares the current values supplied to the home appliances 11 to 15 detected by the current detector 120 with the current profiles stored in the storage unit 160, thereby determining operations of the home appliances 11 to 15 to which similar currents to current supplied to the home appliances 11 to 15 are supplied. In addition, the controller 130 may calculate times at which the home appliances 11 to 15 perform operations that are being currently performed, from time at which currents having the detected current values are supplied to the home appliances 11 to 15.

In addition, when the current values that are currently supplied to the home appliances 11 to 15 are out of an allowable range of the current profiles stored in the storage unit 160 or when patterns of operations that are currently performed by the home appliances 11 to 15 are different from patterns of normal operations of the home appliances 11 to 15, the controller may determine abnormal operations of the home appliances 11 to 15.

Furthermore, the controller 130 may generate operating information of the home appliances 11 to 15 including operations of the home appliances 11 to 15, times at which the operations of the home appliances 11 to 15 are performed, and possibilities of abnormal operations of the home appliances 11 to 15.

The communication unit 140 transmits operating information of the home appliances 11 to 15 generated by the controller 130 to the home server apparatus 10. Although the communication unit 140 is able to communicate with the home server apparatus (see 10 of FIG. 1) through wired communication, for example, the communication unit 140 may communicate with the home server apparatus (see 10 of FIG. 1) through a wireless communication method such as WiFi, Bluetooth, or Zigbee, and the like.

The power controller 170 supplies power to the home appliances 11 to 15 via the socket outlet 103 or cuts off the supply of power according to a control signal of the controller 130.

Hereinafter, operations of the smart apparatus 100, the home server apparatus 10, and the terminal 20 will be described.

FIG. 5A is a flowchart illustrating a control sequence of the smart apparatus 100 of FIG. 3.

Referring to FIG. 5A, the smart apparatus 100 determines whether the home appliances 11 to 15 are connected to the smart apparatus 100 (Operation 510).

If it is determined that the home appliances 11 to 15 are connected to the smart apparatus 100 ("YES" of Operation 510), the smart apparatus 100 recognizes types and models of the home appliances 11 to 15 connected to the smart apparatus 100 (Operation 512). In order to recognize the types and models of the home appliances 11 to 15, the user may input a type and a model of a home appliance using the input unit 110 disposed at the front of the smart apparatus 100 or may transmit the type and the model of the home appliance to the smart apparatus 100 using his/her own terminal 20.

In addition, depending on embodiments, the smart apparatus 100 may recognize a type and a model of a home appliance through an operation of the home appliance. That is, while the home appliance performs a first operation, the smart apparatus 100 may compare current values supplied to the home appliance with current profiles that have been stored in the smart apparatus 100 in advance and are supplied to the home appliance depending on the type and model of the home appliance, thereby recognizing the type and model of the home appliance.

Next, the smart apparatus 100 may detect current values supplied to the home appliances 11 to 15 (Operation 514). In this case, the smart apparatus 100 may detect and simultaneously store the current values supplied to the home appliances 11 to 15, thereby generating current profiles supplied to the home appliances 11 to 15 over time.

Next, the smart apparatus 100 may estimate operations of the home appliances 11 to 15 based on the current values supplied to the home appliances 11 to 15 (Operation 516).

In addition, the smart apparatus 100 calculates times at which the home appliances 11 to 15 perform the estimated operations (Operation 518).

Next, the smart apparatus 100 transmits operating information of the home appliances 11 to 15 including the recognized types of the home appliances 11 to 15, the estimated operations of the home appliances 11 to 15, and the calculated times at which the home appliances 11 to 15 perform the estimated operations, to the home server apparatus 10 (Operation 520).

FIG. 5B is a flowchart illustrating a control sequence of the home server apparatus 10 of the home network system illustrated in FIG. 1.

Referring to FIG. 5B, the home server apparatus 10 determines whether the operating information of the home appliances 11 to 15 are received from the smart apparatus 100 (Operation 530).

If it is determined that the operating information of the home appliances 11 to 15 are received from the smart apparatus 100 ("YES" of Operation 530), the home server apparatus 10 transmits the received operating information of the home appliances 11 to 15 to the terminal 20 (Operation 532).

FIG. 5C is a flowchart illustrating a control sequence of the terminal 20 of the home network system of FIG. 1.

Referring to FIG. 5C, the terminal 20 determines whether the operating information of the home appliances 11 to 15 are received from the home server apparatus 10 (Operation 550).

If it is determined that the operating information of the home appliances 11 to 15 are received from the home server apparatus 10 ("YES" of Operation 550), the terminal 20 displays the received operating information of the home appliances 11 to 15 on a display screen of the terminal 20 held by the user (Operation 552).

As described above, the smart apparatus 100 collects the operating information of the home appliances 11 to 15 and displays the operating information of the home appliances 11 to 15 using a display screen of the terminal 20 held by the user.

Alternatively, the smart apparatus 100 may receive a user's control instruction from the terminal 20 and the home server apparatus 10 and may cut off power supplied to the home appliances 11 to 15, according to the user's control instruction.

In detail, when operations of the home appliances 11 to 15 are terminated and the home appliances 11 to 15 are in a standby state, the user may input a power cutoff instruction using the terminal 20, wherein the power cutoff instruction is transmitted to the home server apparatus 10 through the Internet.

The home server apparatus 10 transmits the received power cutoff instruction to the smart apparatus 100, and the smart apparatus 100 that receives the user's power cutoff instruction through the communication unit 140 cuts off power supplied to the home appliances 11 to 15 using the power controller 170.

Hereinafter, an operation of the smart apparatus 100 according to each of the home appliances 11 to 15 will be described.

FIG. 6 is a view illustrating a washing machine 11 and the smart apparatus 100-11 of the home network system 1 of FIG. 1. Further, FIG. 7 is a view illustrating current supplied to the washing machine 11.

Referring to FIG. 6, power is supplied to the washing machine 11 through the smart apparatus 100-11, the smart apparatus 100-11 connected to the washing machine 11 transmits operating information of the washing machine 11 to the home server apparatus 10, and the home server apparatus 10 transmits the operating information of the washing machine 11 to the terminal 20 held by the user.

In relation to the operation of the washing machine 11, the washing machine 11 is a home appliance that removes foreign substances such as dust, grease, and the like, which are attached to the laundry, through friction between water and the laundry or friction between the laundry. For example, the washing machine 11 may perform a washing operation of washing the laundry, a rinsing operation of removing detergent attached to the washed laundry, a dehydration operation of separating moisture from the rinsed laundry, and a drying operation of drying the dehydrated laundry.

In terms of the operation of the smart apparatus 100-11, when the washing machine 11 is connected to the smart apparatus 100-11, the smart apparatus 100-11 recognizes that a home appliance connected to the smart apparatus 100-11 is the washing machine 11 and a model of the washing machine 11. The smart apparatus 100-11 may recognize that the home appliance connected to the smart apparatus 100-11 is the washing machine 11 and the model of the washing machine 11, through, e.g., a user's direct input or by comparing current values and patterns supplied to the washing machine 11 with current profiles stored in the smart apparatus 100-11, as described above.

Subsequently, the smart apparatus 100-11 supplies power to the washing machine 11 via the socket outlet 103 and detects current values supplied to the washing machine 11 in real time.

In relation to the current values supplied to the washing machine 11 depending on an operation of the washing machine 11, if the washing machine 11 is in a standby state, a minor current of Io is supplied to the washing machine 11, if the washing machine 11 is performing washing and rinsing operations, a current of I1 is supplied to a driving motor (not shown) so as to rotate a drum (not shown) in a forward or backward direction, and if the washing machine 11 is performing a dehydration operation, a current of I₂ is supplied to the driving motor (not shown) so as to rotate the drum (not shown) at a high speed. Also, if the washing machine 11 is performing a drying operation, a drying heater (not shown) operates and a current of I3 is supplied to the drying heater (not shown) so as to maintain the temperature of air inside the drum (not shown) at a high temperature.

In this way, since currents having different values are supplied to the washing machine 11 depending on the operation of the washing machine 11, the smart apparatus 100-11 may measure current values supplied to the washing machine 11 and compare the measured current values with the above-described I1, I₂, and I₃, thereby determining an operation that is being currently performed by the washing machine 11.

As illustrated in FIG. 7, which illustrates an example of current supplied to the washing machine 11 while the washing machine 11 operates, between times 0 and T1, a minor current of I0 is supplied to the washing machine 11, and between times T1 and T2, a current of I1 is supplied to the washing machine 11. From the minor current of I0 supplied to the washing machine 11 between times 0 and T1, the smart apparatus 100-11 may estimate that power of the washing machine 11 is "turned on" at o, and from the current of I1 flowing between times T1 and T2, the smart apparatus 100-11 may estimate that the washing operation of the washing machine starts at T1 and is terminated at T2. In addition, the smart apparatus 100-11 may estimate a period of time at which the washing operation is performed, from a period of time at which the current of I1 is supplied to the washing machine 11.

The smart apparatus 100-11 determines the operation of the washing machine 11 and simultaneously transmits the determined washing operation and washing time to the home server apparatus 10. The home server apparatus 10 that receives the washing operation and washing time of the washing machine 11 from the smart apparatus 100-11 transmits the received washing operation and washing time to the terminal 20 held by the user. The terminal 20 that receives the washing operation and washing time of the washing machine 11 displays that the washing machine 11 is performing the washing operation and a period of time at which the washing operation is performed, on the display screen of the terminal 20 held by the user.

In addition, from the current of I1 supplied to the washing machine 11 during a period between T3-T4 and T5-T6, the smart apparatus 100-11 may determine that the washing machine 11 has performed the rinsing operation twice, from the current of I2 supplied to the washing machine 11 between T7 and T8, the smart apparatus 100-11 may determine that the washing machine 11 has performed the dehydration operation between T7 and T8, and from the current of I3 supplied to the washing machine 11 between T9 and T10, the smart apparatus 100-11 may determine that the washing machine 11 has performed the drying operation between T9 and T10.

The smart apparatus 100-11 transmits the determined operation of the washing machine 11 to the home server apparatus 10 together with a period of time at which the operation has been performed, the home server apparatus 10 that receives the determined operation of the washing machine 11 and the operation time transmits the determined operation of the washing machine 11 and the operation time to the terminal 20, and the terminal 20 that receives the determined operation of the washing machine 11 and the operation time displays the determined operation of the washing machine 11 and the operation time on the display screen of the terminal 20 held by the user.

FIG. 8 is a view illustrating a refrigerator 13 and the smart apparatus 100-13 of the home network system 1 of FIG. 1, FIG. 9A is a view illustrating current supplied when the refrigerator 13 operates normally, and FIG. 9B is a view illustrating current supplied when the refrigerator 13 operates abnormally.

Referring to FIG. 8, power is supplied to the refrigerator 13 via the smart apparatus 100-13, the smart apparatus 100-13 connected to the refrigerator 13 provides operating information of the refrigerator 13 to the home server apparatus 10, and the home server apparatus 10 provides operating information of the refrigerator 13 to the terminal 20 held by the user.

In relation to the operation of the refrigerator 13, the refrigerator 13 may perform the following exemplary operations: firstly, a standby operation in which the temperature of a storage compartment (not shown) in which stored goods are stored, is sufficiently low and a compressor (not shown) of the refrigerator 13 does not operate and waits; secondly, a cooling operation in which the temperature of the storage compartment (not shown) rises and the compressor (not shown) of the refrigerator 13 operates; and thirdly, a defrost operation in which frost is formed on an evaporator (not shown) of the refrigerator 13 due to the operation of the compressor (not shown) and the formed frost is removed.

The smart apparatus 100-13 connected to the refrigerator 13 may recognize that a home appliance connected to the smart apparatus 100-13 is the refrigerator 13 and a model of the refrigerator 13 through a user's input or current values and patterns supplied to the refrigerator 13.

Additionally, the smart apparatus 100-13 supplies power to the refrigerator 13 via the socket outlet 103 and detects the current values supplied to the refrigerator 13 in real time.

In relation to the current values supplied to the refrigerator 13 according to the operation of the refrigerator 13, when the refrigerator 13 is performing the standby operation, a minor current of Io is supplied to the refrigerator 13, and when the refrigerator 13 performs the cooling operation of cooling the storage compartment (not shown), a current of I1 is supplied to the driving motor (not shown) for driving the compressor (not shown). In addition, when the refrigerator 13 performs the defrost operation of removing the frost formed on the evaporator (not shown), the defrost heater (not shown) operates and a current of I2 is supplied to the defrost heater (not shown).

In this way, since currents having different values are supplied to the refrigerator 13 according to the standby operation, the cooling operation, and the defrost operation, the smart apparatus 100-13 may measure current values supplied to the refrigerator 13 and compare the measured current values with the above-described I0, I1, and I2, thereby determining an operation that is being currently performed by the refrigerator 13.

As illustrated in FIG. 9A, between 0 and T1, a minor current of Io is supplied to the refrigerator 13, and between T1 and T2, a current of I1 is supplied to the refrigerator 13. In this way, from the minor current of I0 supplied to the refrigerator 13 between 0 and T1, the smart apparatus 100-13 may determine that the refrigerator 13 has performed the standby operation between 0 and T1. Further, from the current of I1 supplied to the refrigerator 13 between T1 and T2, the smart apparatus 100-13 may determine that the refrigerator 13 drives the compressor (not shown) at time T1 and has performed the cooling operation between T1 and T2.

Moreover, from a current of I2 supplied to the refrigerator 13 between T2 and T3, the smart apparatus 100-13 may determine that the defrost heater (not shown) operates at time T2 and the refrigerator 13 has performed the defrost operation.

In addition, the smart apparatus 100-13 may determine an operation performed by the refrigerator 13 and whether the refrigerator 13 is performing an abnormal operation.

As illustrated in FIG. 9B, from a minor current of I0 supplied to the refrigerator 13 between 0 and T1, the smart apparatus 100-13 may determine that the refrigerator 13 has performed the standby operation between 0 and T1. From a current of I1 supplied to the refrigerator 13 between T1 and T2, a current of I2 supplied to the refrigerator 13 between T2 and T3 and a current of I1 supplied to the refrigerator 13 immediately after T3, the smart apparatus 100-13 may determine that the refrigerator 13 has performed the cooling operation between T1 and T2, the defrost operation between T2 and T3 and the cooling operation after T3 immediately without performing the standby operation.

From the cooling operation performed immediately after T3 without performing the standby operation after the defrost operation between T2 and T3 has been performed, the smart apparatus 100-13 may determine that the refrigerator 13 is in an abnormal state, like a state in which a door (not shown) of the refrigerator 13 is opened. This is because, in a normal operation of the refrigerator 13, the refrigerator 13 performs the defrost operation after the cooling operation has been performed and then does not immediately perform the cooling operation.

In this way, the smart apparatus 100-13 that estimates the abnormal operation of the refrigerator 13 transmits the abnormal operation of the refrigerator 13 to the home server apparatus 10, and the home server apparatus 10 that receives the abnormal operation of the refrigerator 13 transmits the abnormal operation of the refrigerator 13 to the terminal 20 held by the user. The terminal 20 that receives the abnormal operation of the refrigerator 13 enables the user to recognize the abnormal operation of the refrigerator 13 through a vibration or sound.

As above, the smart apparatus 100 including one socket outlet 103 has been described.

However, aspects of the present disclosure are not limited thereto, and the smart apparatus 100 according to the present disclosure may include a plurality of socket outlets.
FIG. 10 is a view illustrating the exterior of a smart apparatus 200, according to another example embodiment of the present disclosure. Further, FIG. 11 is a block diagram illustrating a control flow of the smart apparatus 200 illustrated in FIG. 10.

Referring to FIG. 10, the smart apparatus 200, according to another example embodiment of the present disclosure may include a body 201 that constitutes the exterior of the smart apparatus 200, a plug 205 to which power is supplied from a commonly-used power supply, a plurality of socket outlets 203-1 to 5 that supply power to a plurality of home appliances 11 to 15, a plurality of display units 250-1 to 5 that display information of the plurality of home appliances 11 to 15, and an input unit 210 that receives a control instruction from the user.

The body 201 may have a shape of a long bar in which the plurality of socket outlets 203-1 to 5 and the plurality of display units 250-1 to 5 may be accommodated.

However, the described shape of body 201 is an example, and thus, the present disclosure is not limited thereto.

The plug 205 may be connected to the body 201 via an electric wire 207 disposed at a side of the body 201, and power of 110 V or 220 V is supplied to the plug 205 from a commonly-used power supply. As illustrated in FIG. 10, the plug 205 may include two cylinders that contact the commonly-used power supply. However, aspects of the present disclosure are not limited thereto, and the plug 205 may have a shape suitable for the standard of each country, like the plug 105 of the smart apparatus 100 illustrated in FIG. 3.

The plurality of socket outlets 203-1 to 5 may be disposed at a front side of the body 201 and provide power of 110 V or 220 V supplied from the commonly-used power supply to the home appliances 11 to 15. As illustrated in FIG. 10, each of the plurality of socket outlets 203-1 to 5 may include two circular holes. However, aspects of the present disclosure are not limited thereto, and each of the plurality of socket outlets 203-1 to 5 may have a shape suitable for the standard of each country, like the socket outlet 103 of the smart apparatus 100 illustrated in FIG. 3.

The plurality of display units 250-1 to 5 may be disposed at the front of the body 201 to correspond to the plurality of socket outlets 203-1 to 5 and display information or operating information of the home appliances 11 to 15 to which power is supplied via the plurality of socket outlets 203-1 to 5.

The input unit 210 may be disposed at the front of the body 201 and may receive a control instruction to turn on/off the smart apparatus 200, to cut off power supplied to the home appliances 11 to 15, or to change the content of information displayed on the display unit 250 from the user.

Referring to FIG. 11, the smart apparatus 200 may include the input unit 210 that receives the control instruction from the user so as to perform a function of the smart apparatus 200, a plurality of current detectors 220-1 to 5 that detect current values supplied to the home appliances 11 to 15 via the plurality of socket outlets 203-1 to 5, a storage unit 260 that stores current profiles supplied to the home appliances 11 to 15, a controller 230 that generates operating information of the home appliances 11 to 15 based on the detection results of the plurality of current detectors 220-1 to 5 and the current profiles stored in the storage unit 260, a communication unit 240 that communicates with the home server apparatus 10, the plurality of display units 250-1 to 5 that display information or operating information of the home appliances 11 to 15, and a power controller 270 that controls power supplied to the home appliances 11 to 15.

Descriptions of the input unit 210 and the plurality of display units 250-1 to 5 that have been already described with reference to FIG. 10 will be omitted.

The plurality of current detectors 220-1 to 5 detect the current values supplied to the home appliances 11 to 15 via the plurality of socket outlets 203-1 to 5 and provide the detected current values to the controller 230.

The storage unit 260 stores current profiles supplied to the home appliances 11 to 15 according to types, models, and operations of the home appliances 11 to 15. The configuration and function of the storage unit 260 may be the same as those of the storage unit 160 of the smart apparatus 100 illustrated in FIG. 4 and thus, descriptions thereof will be omitted.

The controller 230 determines an operation that is being currently performed by each of the home appliances 11 to 15 based on the detection results of the plurality of current detectors 220-1 to 5 and the current profiles stored in the storage unit 260, calculates a period of time at which each of the home appliances 11 to 15 has performed the operation that is being currently performed, and generates operating information of each of the home appliances 11 to 15.

The communication unit 240 transmits the operating information of each of the home appliances 11 to 15 generated by the controller 230 to the home server apparatus 10.

The configuration and function of the communication unit 240 may be the same as those of the communication unit 140 of the smart apparatus 100 illustrated in FIG. 4, and thus, detailed descriptions thereof will be omitted.

The power controller 270 supplies power to the home appliances 11 to 15 via the plurality of socket outlets 203-1 to 5 or cuts off the supply of power, according to a control signal of the controller 230.

In relation to an operation of the home network system using the smart apparatus 200 illustrated in FIG. 10, the smart apparatus 200 determines whether the home appliances 11 to 15 are connected to the plurality of socket outlets 203-1 to 5, and if it is determined that the home appliances 11 to 15 are connected to the plurality of socket outlets 203-1 to 5, the smart apparatus 200 recognizes types and models of the home appliances 11 to 15 connected to the plurality of socket outlets 203-1 to 5.

Next, the smart apparatus 200 detects the current values supplied to the home appliances 11 to 15 via the plurality of current detectors 220-1 to 5, determines an operating state of each of the home appliances 11 to 15 based on each of the detected current values and current profiles that have been stored in the smart apparatus 200 in advance according to operations of the home appliances 11 to 15, and calculates an operation time at which each of the home appliances 11 to 15 has performed the determined operation.

Next, the smart apparatus 200 transmits operating information including a type, an operation, and an operation time of each of the home appliances 11 to 15 to the home server apparatus 10.

If the operating information of each of the home appliances 11 to 15 are received, the home server apparatus 10 transmits the operating information to the terminal 20 held by the user, and the terminal 20 displays the received operating information to the user.

In this way, the smart apparatus 200 illustrated in FIG. 10 includes the plurality of socket outlets 203-1 to 5, unlike the smart apparatus 100 illustrated in FIG. 3, thereby detecting current values supplied to the home appliances 11 to 15 and determining an operation, an operation time, and a possibility of an abnormal operation of each of the home appliances 11 to 15 based on the detected current values.

As above, the smart apparatus that determines operations, operation times, and possibilities of abnormal operations of home appliances based on current values supplied to the home appliances has been described. However, aspects of the present disclosure are not limited thereto, and the smart apparatus according to the present disclosure may determine operations, operation times, and possibilities of abnormal operations of home appliances based on power consumed by the home appliances.

FIG. 12 is a block diagram illustrating a control flow of a smart apparatus 300, according to another example embodiment of the present disclosure.

Referring to FIG. 12, the smart apparatus 300 may include an input unit 310 that receives a control instruction from the user so as to perform a function of the smart apparatus 300, a current detector 320 that detects current values supplied to the home appliances 11 to 15, a voltage detector 325 that detects voltage values applied to the home appliances 11 to 15, a storage unit 360 that stores power profiles consumed by the home appliances 11 to 15, a controller 330 that generates operating information of the home appliances 11 to 15 based on detection results of the current detector 320 and the voltage detector 325 and the power profiles stored in the storage unit 360, a communication unit 340 that communicates with the home server apparatus 10, a display unit 350 that displays information or operating information of the home appliances 11 to 15, and a power controller 370 that controls power supplied to the home appliances 11 to 15.

Configurations and functions of the input unit 310, the display unit 350, the current detector 320, the communication unit 340, and the power controller 370 may be the same as those of the input unit 110, the display unit 150, the current detector 120, and the power controller 170 of the smart apparatus 100 illustrated in FIG. 4, and thus descriptions thereof will be omitted.

The voltage detector 325 detects voltage values applied to the home appliances 11 to 15. In case of commonly-used voltages, voltages of 110 V or 220 V are applied to the home appliances 11 to 15, and the voltage detector 325 may be provided to calculate accurate consumed power of the home appliances 11 to 15.

The storage unit 360 stores power profiles consumed by the home appliances 11 to 15 according to types, models, and operations of the home appliances 11 to 15.

The power profiles according to the types, models, and operations of the home appliances 11 to 15 may be stored when the smart apparatus 300 is manufactured, and after the smart apparatus 300 has been manufactured, a power profile according to an operation of a new home appliance may be additionally updated.

The controller 330 calculates consumed power of the home appliances 11 to 15 based on the current values detected by the current detector 320 and the voltage values detected by the voltage detector 325, compares the calculated consumed power with the power profiles stored in the storage unit 360 to determine an operation that is being currently performed by each of the home appliances 11 to 15, calculates an operation time based on a period of time at which an operation that is being currently performed by each of the home appliances 11 to 15 has been performed, and generates operating information.

In relation to an operation of the home network system using the smart apparatus 300 illustrated in FIG. 12, the smart apparatus 300 determines whether the home appliances 11 to 15 are connected to the smart apparatus 300, and if it is determined that the home appliances 11 to 15 are connected to the smart apparatus 300, the smart apparatus 300 recognizes types and models of the home appliances 11 to 15 connected to the smart apparatus 300.

Next, the smart apparatus 300 calculates consumed power of the home appliances 11 to 15 based on the current values detected by the current detector 320 and the voltage values detected by the voltage detector 325, determines an operation of each of the home appliances 11 to 15 based on the calculated consumed power and the power profiles that have been stored in the smart apparatus 300 in advance and are supplied to the home appliances 11 to 15 depending on operations of the home appliances 11 to 15, and calculates a period of time at which the determined operation has been performed.

Next, the smart apparatus 300 transmits the recognized operating information including types, operations, and operation times of the home appliances 11 to 15 to the home server apparatus 10, and the home server apparatus 10 transmits the operating information to the terminal 20 when receiving the operating information.

The terminal 20 that receives the operating information of the home appliances 11 to 15 displays the operating information on the display screen of the terminal 20 held by the user.

In this way, the smart apparatus 300 illustrated in FIG. 12 further includes the voltage detector 325, unlike the smart apparatus 100 of FIG. 4, thus generating operating information including types, operations, and operation times of the home appliances 11 to 15 based on the consumed power of the home appliances 11 to 15.

According to the principals of the present disclosure, a smart apparatus that determines an operation of a home appliance based on current or power supplied to the home appliance without adding a new configuration to an existing home appliance, and a home network system using the smart apparatus can be provided.

The embodiments can be implemented in computing hardware (computing apparatus) and/or software, such as (in a non-limiting example) any computer that can store, retrieve, process and/or output data and/or communicate with other computers. The results produced can be displayed on a display of the computing hardware. A program/software implementing the embodiments may be recorded on non-transitory computer-readable media comprising computer-readable recording media. Examples of the computer-readable recording media include a magnetic recording apparatus, an optical disk, a magneto-optical disk, and/or a semiconductor memory (for example, RAM, ROM, etc.). Examples of the magnetic recording apparatus include a hard disk device (HDD), a flexible disk (FD), and a magnetic tape (MT). Examples of the optical disk include a DVD (Digital Versatile Disc), a DVD-RAM, a CD-ROM (Compact Disc - Read Only Memory), and a CD-R (Recordable)/RW.

Further, according to an aspect of the embodiments, any combinations of the described features, functions and/or operations can be provided.

Moreover, any of the apparatuses discussed above may include at least one processing device to execute at least one of the above-described units and methods.

Although a few embodiments of the present disclosure have been shown and described, it would be appreciated by those skilled in the art that changes may be made in these embodiments without departing from the principles of the disclosure, the scope of which is defined in the claims and their equivalents.

## Claims

1. A smart apparatus, comprising:
a storage unit arranged to store a current profile supplied to a home appliance according to an operation of the home appliance;
a current detector arranged to detect a current value supplied to the home appliance; and
a controller arranged to generate operating information of the home appliance based on the current value detected by the current detector and the current profile stored in the storage unit.

2. The smart apparatus according to claim 1, wherein the controller is arranged to compare the current value with the current profile to determine an operation being currently performed by the home appliance and calculates an operation time at which the operation has been performed by the home appliance to generate the operating information.

3. The smart apparatus according to claim 2, further comprising a communication unit arranged to transmit the operating information of the home appliance to a home server apparatus.

4. The smart apparatus according to claim 3, further comprising a socket outlet arranged to supply power to the home appliance.

5. The smart apparatus according to claim 4, further comprising an input unit arranged to receive a control instruction from a user.

6. The smart apparatus according to claim 5, further comprising a power controller arranged to cut off power supplied to the home appliance.

7. The smart apparatus according to claim 6, wherein, if a user's power cutoff instruction is input via the input unit or the communication unit, the controller is arranged to control the power controller to cut off power supplied to the home appliance.

8. The smart apparatus according to any one of claims 4 to 7, wherein, when the home appliance is connected to the smart apparatus via the socket outlet, the controller is arranged to recognize a type and a model of the home appliance.

9. The smart apparatus according to claim 8, wherein the controller is arranged to receive the type and the model of the home appliance from the user via the input unit and recognizes the type and the model of the home appliance.

10. The smart apparatus according to claim 8 or 9, wherein the controller is arranged to compare the detected current value with the stored current profile to recognize the type and the model of the home appliance.

11. A method of controlling a smart apparatus that generates operating information of a home appliance, the method comprising:
detecting a current value supplied to the home appliance;
comparing the current value with a current profile that has been stored in advance and is supplied to the home appliance;
determining an operation being currently performed by the home appliance based on a comparison result of the current value and the current profile; and
calculating an operation time of the home appliance based on a period of time at which the operation has been performed by the home appliance.

12. The method of claim 11, further comprising, when the home appliance is connected to the smart apparatus, recognizing a type and a model of the home appliance.

13. The method of claim 12, wherein the recognizing of the type and the model of the home appliance comprises receiving the type and the model of the home appliance from a user.

14. The method of claim 12 or 13, wherein the recognizing of the type and the model of the home appliance comprises comparing the current value with the current profile and recognizing the type and the model of the home appliance based on a comparison result of the current value and the current profile.

15. The method of any one of claims 11 to 14, further comprising displaying the operation that is being currently performed by the home appliance and the operation time on a display screen of a terminal.
